# EUROPÄISCHE PATENTSCHRIFT

(11) **EP 1 767 811 B1**
(45) Veröffentlichungstag und Bekanntmachung des Hinweises auf die Patenterteilung: **11.02.2009**
(21) Anmeldenummer: 06018428.0
(22) Anmeldetag: 04.09.2006
(51) Int. Cl.: F16F 9/512, F16F 9/34

(54) **Schwingungsdämpfer mit amplitudenselektiver Dämpfkraft**
Shock absorber with a damping force depending on the amplitude
Amortisseur de vibrations avec une force d'amortissement dépendant de l'amplitude

(30) Priorität: 22.09.2005 DE 102005045267
(43) Veröffentlichungstag der Anmeldung: 28.03.2007
(73) Patentinhaber: ZF Friedrichshafen AG, 88046 Friedrichshafen (DE)
(72) Erfinder: Hammer, Thomas, 97653 Bischofsheim (DE); Doppermas, Michael, 96170 Priesendorf (DE); Denner, Manfred, 97711 Massbach (DE); Planitzer, Matthias, 97520 Röthlein (DE)

(56) Entgegenhaltungen:
- DE-A1- 19 948 328
- DE-B4- 19 749 356
- JP-A- 4 102 737

## Beschreibung

Die Erfindung betrifft einen Schwingungsdämpfer mit amplitudenselektiver Dämpfkraft gemäß dem Oberbegriff von Patentanspruch 1.

Aus der DE 197 49 356 B4 ist ein Schwingungsdämpfer mit amplitudenselektiver Dämpfkraft bekannt, der eine Kolbenanordnung aufweist, die ein unteres und ein oberes Ventil umfasst, die von einem Abstandsstück auf Abstand gehalten werden. Beide Ventile sind jeweils beidseitig mit Dämpfventilscheiben und mindestens einer Rückschlagventilscheibe bestückt. Zwischen den beiden Ventilen ist ein Schaltring axial verschiebbar angeordnet, der in Abhängigkeit der Bewegungsrichtung der Kolbenstange auf den einander zugewandten Ventilscheiben der beiden Ventile zur Anlage kommt und dabei einen Ringspalt zwischen den Ventilscheiben und der Innenwandung des Zylinders freigibt oder blockiert.

Die DE 199 48 328 A1 beschreibt ebenfalls einen Schwingungsdämpfer mit amplitudenselektiver Dämpfkraft, dessen Kolbenanordnung einen axial beweglichen Schaltring aufweist, der eine Strömungsverbindung durch einen hohlen Kolbenstangenzapfen steuert. Eine Auslassöffnung der Strömungsverbindung ist einer Anschlagfläche für den Schaltring vorgelagert. Dadurch können Geräuschprobleme eingeschränkt werden. Es muss jedoch hingenommen werden, dass die amplitudenselektive Dämpfkraftänderung nur in Ausfahrrichtung der Kolbenstange möglich ist und ein gewisser Totweg, nämlich der Abstand der Auslassöffnung bis zur Anschlagfläche überwunden werden muss, bis eine amplitudenselektive Dämpfkraftänderung in Ausfahrrichtung wirksam wird.

Aufgabe der vorliegenden Erfindung ist es alternative Lösungen zur Geräuschminimierung bei einem Schwingungsdämpfer mit amplitudenselektiver Dämpfkraft aufzuzeigen.

Erfindungsgemäß wird die Aufgabe dadurch gelöst, dass hydraulisch parallel zur Strömungsverbindung ein Bypasskanal vorliegt, der mindestens zwei Verbindungsöffnungen zur Strömungsverbindung aufweist, wobei jeweils mindestens eine Verbindungsöffnung einer Anschlagfläche vorgelagert ist und eine Rückschlagventilanordnung den Bypasskanal und die Strömungsverbindung bei den verschiedenen Strömungsrichtungen in Abhängigkeit der Kolbenstangenbewegungen voneinander trennt, indem die Rückschlagventilanordnung zwei Rückschlagventile aufweist, die ein gegensinniges Schließverhalten aufweisen.

Der Bypasskanal und die Verbindungsöffnungen sorgen für ein Druckpolster, das Schaltgeräusche des Schaltrings verhindert. Damit innerhalb der Kolbenanordnungen einerseits keine hydraulischen Kurzschlüsse auftreten und andererseits für beide Kolbenstangenbewegungsrichtungen der technische Effekt des Druckpolsters zur Verfügung steht, wird durch die Rückschlagventilanordnung der Volumen gelenkt.

In weiterer vorteilhafter Ausgestaltung wird der Bypasskanal von einer Distanzhülse gebildet. Pro Strömungsrichtung steht mindestens ein separater Bypasskanal zur Verfügung, der von einer Sacklochöffnung gebildet wird.

Um am Schaltring keine Staudrücke aufkommen zu lassen, die die axiale Beweglichkeit des Schaltrings behindern, ist die Distanzhülse auf ihrer Außenseite mit einem Längsprofil zur Hinterströmung des Schaltrings ausgeführt.

Die Bypasskanäle werden von Sacklochbohrungen gebildet, die durch Queröffnungen miteinander verbunden sind. Durch diese Ausgestaltung können die Bypasskanäle je nach Bewegungsrichtung der Kolbenstange und der Schaltstellung des Schaltrings einseitig- oder wechselseitig durchströmt werden.

Des weiteren weist die Kolbenanordnung einen Verteilerring mit einen Anschluss an die Strömungsverbindung und den Bypasskanal auf. Der Verteilerring ist einem konventionellen Dämpfkolben räumlich nachgeordnet.

Die den Voröffnungsquerschnitt mitbegrenzende Wirkfläche kann von einer Anschlagfläche oder von der Distanzhülse gebildet werden. Man kann auch eine kombinierte Ausführung wählen, indem man z. B. den Voröffnungsquerschnitt in der Distanzhülse in unmittelbarer Nähe zu einer Anschlagfläche positioniert, so dass ein z. B. größerer Voröffnungsquerschnitt vorliegt, bevor der Schaltring die Anschlagfläche erreicht.

Des weiteren kann für die Kolbenstangeneinfahr- und Ausfahrbewegung unterschiedlich große Voröffnungsquerschnitte vorliegen.

Gemäß einem weiteren vorteilhaften Unteranspruch ist der Strömungsverbindung ein Voröffnungsring vorgelagert, der einen axial beweglichen Ventilring aufweist, der in Abhängigkeit seiner Schaltstellung einen Zufluss- und einen Anschlussquerschnitt für die Strömungsverbindung bestimmt. Versuche haben ergeben, dass der Zufluss in die Strömungsverbindung tendenziell etwas kleiner sein soll, als der Anschlussquerschnitt, da ansonsten aufgrund der Druckverhältnis für den Schaltring der von den Anschlagflächen bestimmte maximale Steuerweg nicht voll zur Verfügung steht.

Im Hinblick auf eine kompakte Bauweise begrenzen der Voröffnungsring und der Verteilerring einen Ringraum, in dem eines der Rückschlagventile angeordnet ist. Das Rückschlagventil wird von einem Ventilring und z. B. einer einfachen Wellfeder gebildet.

Des weiteren bildet der Voröffnungsring zusammen mit dem hülsenförmigen Grundträger eine Schaltringnut für den Ventilring. Durch die axiale Zweiteilung der Schaltringnut können die Zu- und Anschlussquerschnitte in die beteiligten Bauteile sehr leicht eingeprägt werden.

Gemäß einer weiteren vorteilhaften Ausführungsform ist der Voröffnungsquerschnitt außerhalb der Flächen angeordnet ist, die die von dem Schaltring getrennten Ringräume begrenzen. Der Vorteil besteht darin, dass man je nach Ausgestaltung keine Prägungen für die Voröffnungsquerschnitte in die Voröffnungsringe vornehmen muss, die u. U. zu einem Verzug des Bauteils führen. Noch wichtiger ist jedoch der Vorteil, dass durch das hochfrequente Anschlagen des Schaltrings an den Anschlagflächen keine Veränderungen an den Voröffnungsquerschnitten auftreten können.

Z. B. ist der Voröffnungsquerschnitt abflussseitig an mindestens einem der Ringräume für ein Rückschlagventil ausgeführt.

Man kann den Voröffnungsquerschnitt zwischen der Distanzhülse und dem Voröffnungsquerring ausgeführt vorsehen.

Des weiteren besteht die Möglichkeit, dass der Voröffnungsquerschnitt einen Bestandteil des Rückschlagventils darstellt.

So kann man den Voröffnungsquerschnitt z. B. innerhalb einer Ventilsitzfläche für das Rückschlagventil anordnen.

Alternativ kann der Voröffnungsquerschnitt von mindestens einer Voröffnungsscheibe gebildet werden, mit der sich sehr leicht Kennlinienanpassungen vornehmen lassen.

Eine weitere Maßnahme zur Vereinfachung der Fertigung, insbesondere zur Vermeidung von Prägungen, besteht darin, dass der Voröffnungsring axial zweigeteilt ausgeführt ist und eine Ventilscheibe mit dem Zuflussquerschnitt durch die Voröffnungsteilringe verspannt ist.

Der Anschlussquerschnitt lässt sich dann innerhalb einer Ventilscheibe ausführen.

Anhand der folgenden Figurenbeschreibung soll die Erfindung näher erläutert werden.

Es zeigt:
- Fig. 1: Kolbenanordnung in Schnittdarstellung für einen Schwingungsdämpfer
- Fig. 2: Kolbenanordnung nach Fig. 1 mit winkelversetzter Schnittebene
- Fig. 3: Ansicht der Kolbenanordnung nach Fig. 1
- Fig. 4 - 6: Hülsenförmiger Grundträger als Einzelteil
- Fig. 7 - 8: Distanzhülse als Einzelteil

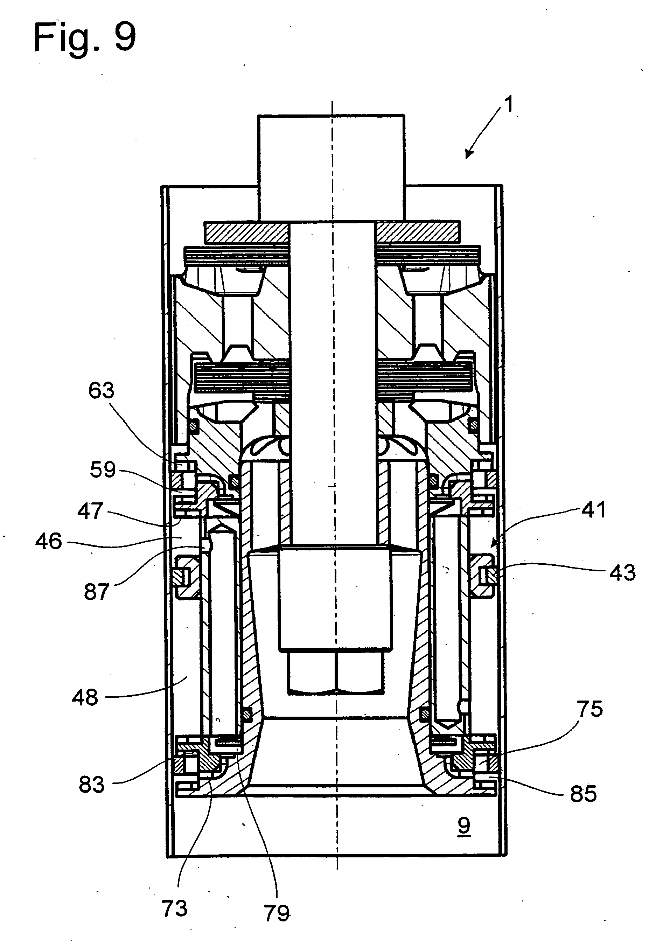

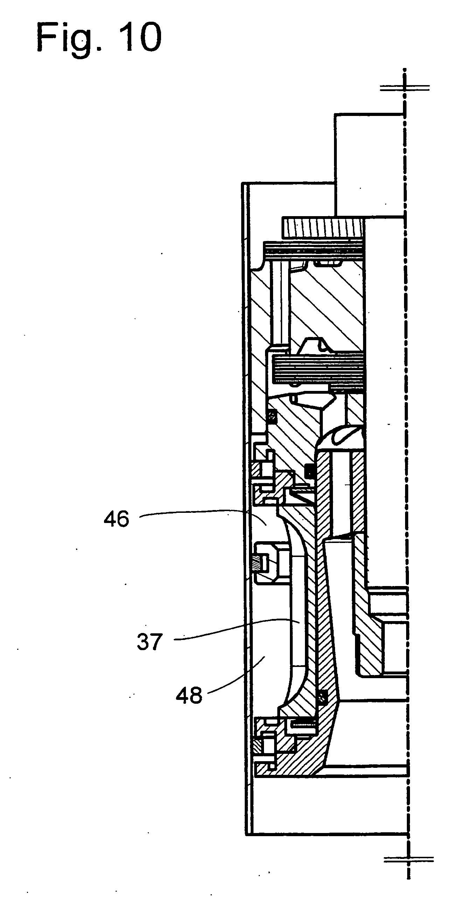

- Fig. 9 - 10: Schnittdarstellung durch die Kolbenanordnung in Einfahrrichtung mit kleiner Dämpfkraft
- Fig. 11 - 12: Detaildarstellung zu den Fig. 9 - 10
- Fig. 13 - 14: Schnittdarstellung durch die Kolbenanordnung in Einfahrrichtung mit größerer Dämpfkraft
- Fig. 15: Detaildarstellung zu den Fig. 13 - 14
- Fig. 16 -17: Schnittdarstellung durch die Kolbenanordnung in Ausfahrrichtung mit kleiner Dämpfkraft
- Fig. 18 - 19: Schnittdarstellung durch die Kolbenanordnung in Ausfahrrichtung mit größerer Dämpfkraft
- Fig. 20 - 21: Detaildarstellung zu den Fig. 18 - 19
- Fig. 22 - 24: Detaildarstellung mit einem Voröffnungsquerschnitt zwischen Voröffnungsring und Distanzhülse
- Fig. 25 - 27: Detaildarstellung mit einem Voröffnungsquerschnitt im Ventilsitz für das Rückschlagventil
- Fig. 28: Detaildarstellung mit einem Voröffnungsquerschnitt innerhalb einer Ventilscheibe für das Rückschlagventil
- Fig. 29 - 30: Detaildarstellung zum axial geteilten Voröffnungsring

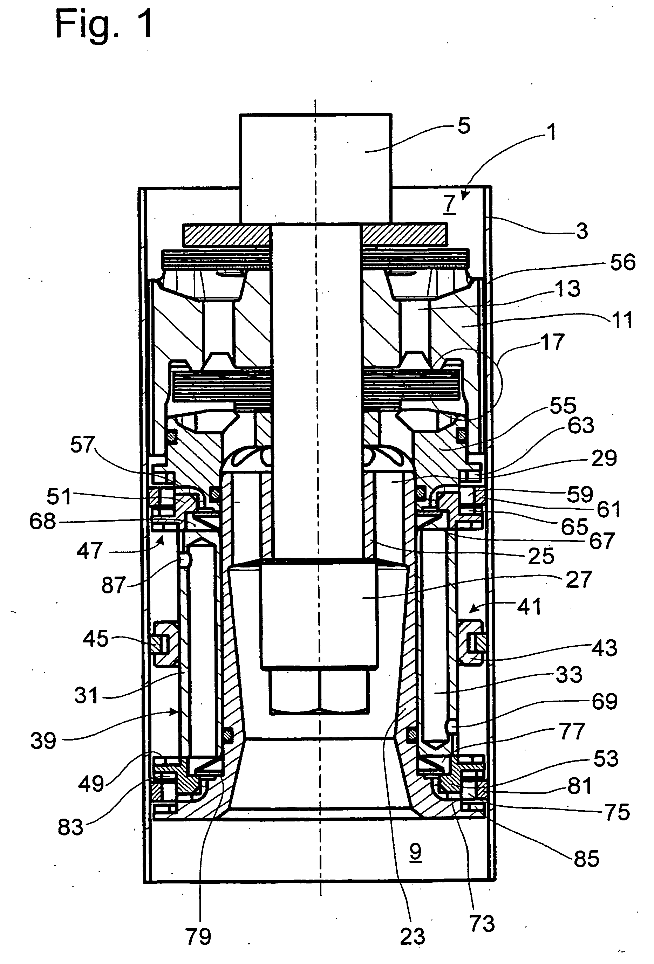

In der Zusammenschau der Figuren 1 bis 3 ist eine Kolbenanordnung 1 innerhalb eines dämpfmediumgefüllten Zylinders 3 als Teil eines Schwingungsdämpfers erkennbar. Dabei ist es unerheblich, ob der Schwingungsdämpfer nach dem Einrohr- oder Zweirohrprinzip aufgebaut ist. Die Kolbenanordnung ist an einer Kolbenstange 5 befestigt und unteilt den Zylinder in einen kolbenstangenseitigen und einen kolbenstangenfernen Arbeitsraum 7; 9.

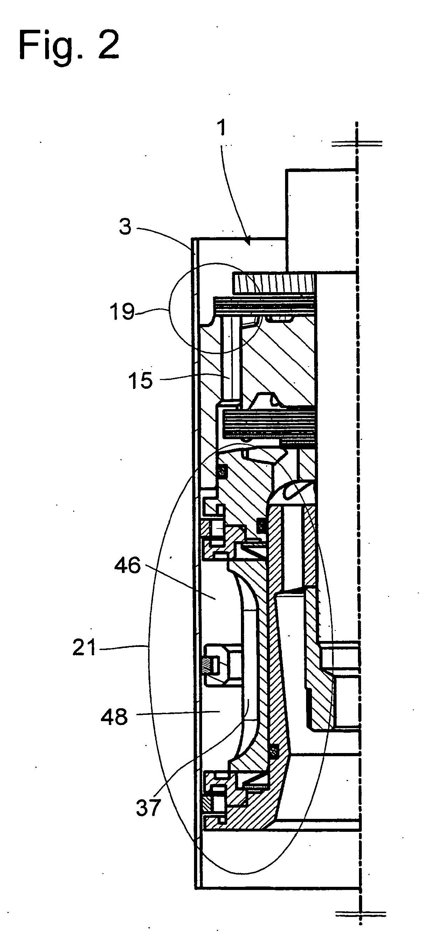

Ein Kolben 11 mit Durchtrittskanälen 13; 15 ist mit Ventilscheiben bestückt, so dass für beide Durchströmungsrichtungen Dämpfventile 17; 19 zur Verfügung stehen. An dem Kolben stützt sich radial und axial eine Baugruppe 21 ab (Fig. 2), die einen hülsenförmigen Grundträger 23 aufweist, dessen Boden 25 von einer Kolbenmutter 27 axial verspannt ist.

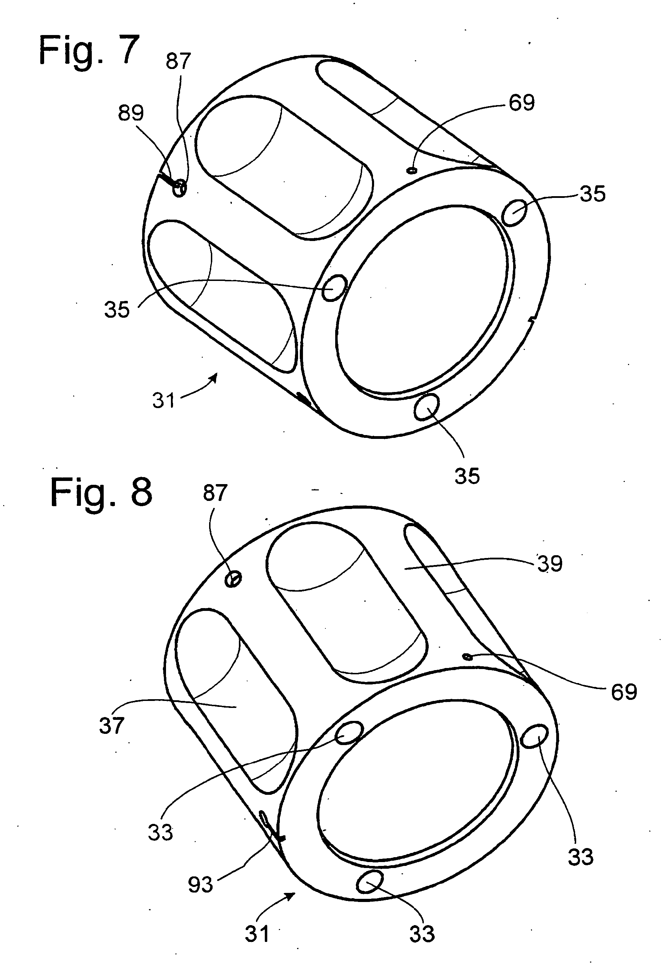

In der Figurenreihe 4 bis 6 ist der hülsenförmige Grundträger 23 als Einzelteil dargestellt. Der Boden 25 verfügt über mehrere axiale Durchgangsöffnungen 29, die den Dämpfmediumaustausch über Dämpfventile 17; 19 des Kolbens 11 sicherstellen. Am anderen Ende des Grundträgers ist ein mehrfach gestufter Flansch 20 ausgeführt, der, wie die Figuren 1 und 2 zeigen, eine Distanzhülse 31 trägt, die in den Figuren 7 und 8 als Einzelteil gezeigt ist. Die Distanzhülse 31 verfügt über mehrere auf einem Teilkreis wechselweise angeordnete Sacklochbohrungen 33; 35, sowie über ein Längsprofil in Form von axial verlaufenden Verbindungskanälen 37. Auf der Mantelfläche 39 der Distanzhülse 31 ist axial verschiebbar ein Schaltring 41 (Fig. 1) gelagert, der aus einem Führungsring 43 und einem Drosselring 45 besteht. Der Drosselring 45 kann auch als Dichtring ausgeführt sein. Der axiale Verschiebeweg des Drosselrings 45 wird von zwei Anschlagflächen 47; 49 begrenzt, die an Voröffnungsringen 51, 53 spiegelbildlich realisiert sind. Die Distanzhülse 31 und die Innenwandung des Zylinders begrenzen zwei Ringräume 46; 48, deren Größe sich in Abhängigkeit der Schaltringposition gegenläufig ändert. Die Ringräume 46; 48 stellen zusammen mit den Verbindungskanälen eine Verlängerung der Strömungsverbindung 56 im Kolben 11 dar. Axial zwischen dem Kolben 11 und dem Voröffnungsring 51 erstreckt sich ein Verteilerring 55, der den hülsenförmigen Grundträger 23 und den Voröffnungsring 51 zentriert.

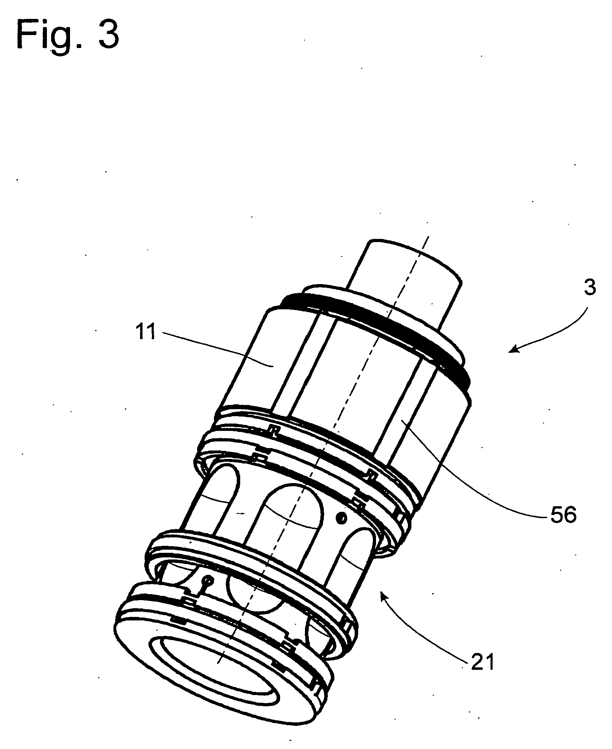

Die Figuren 1 und 3 zeigen eine Strömungsverbindung 56, die beispielsweise als axial verlaufende Nuten im Kolben geformt sind. Hydraulisch parallel zu den Durchtrittskanälen 13; 15 kann das Dämpfmedium in Richtung des Verteilerrings 55 strömen. Der Verteilerring verfügt über radial verlaufende Taschen, die zusammen mit dem Voröffnungsring 51 einen Anschluss 57 von der Strömungsverbindung 56 zu den Sacklochbohrungen 33; 35 begrenzen. Des weiteren bilden der Voröffnungsring 51 und der Verteilerring 55 eine Schaltringnut 59, in der ein axial beweglicher Ventilring 61 gekammert ist. Die Schaltringnut bestimmt zusammen mit den Nutseitenflächen des Ventilrings 61 einen Zuflussquerschnitt 63 zum Ringraum 46 und einen Anschlussquerschnitt 65 für den Arbeitsraum 7.

Hydraulisch parallel zu dem Ventilring 61 ist ein erstes Rückschlagventil 67 in einem Ringraum 68, begrenzt von dem Voröffnungsring 51 und dem Verteilerring 55, angeordnet. Das Rückschlagventil 67 öffnet in Strömungsrichtung in die Sacklochbohrung 33. Jede der Sacklochbohrungen 33 verfügt über eine Queröffnung 69 zum Ringraum 48, so dass die Sacklochbohrungen der Distanzhülse einen Bypasskanal von der Strömungsverbindung 56 zu den Ringräumen 46; 48 bilden.

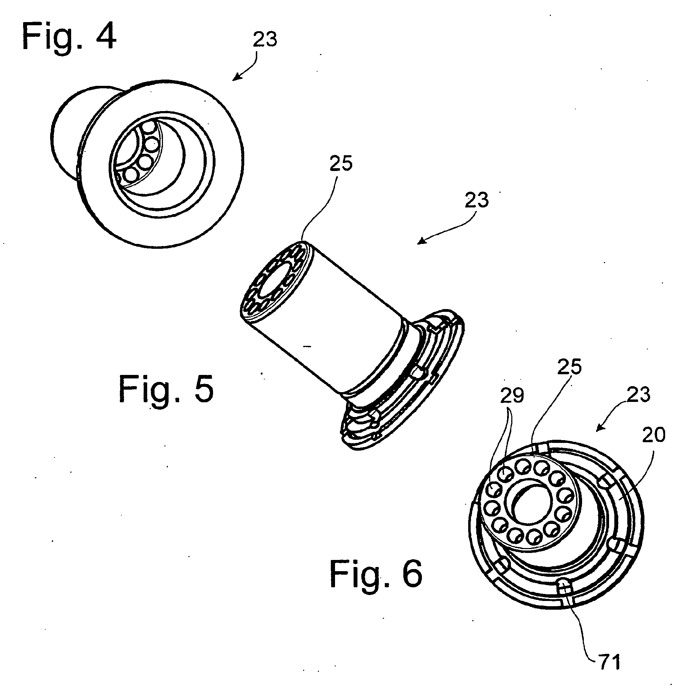

Auch auf dem Flansch 20 des hülsenförmigen Grundträgers 23 stützt sich der Voröffnungsring 53 ab. Der Voröffnungsring 53 bildet mit Taschen 71 des hülsenförmigen Grundträgers Anschlüsse 73 (Fig. 6) sowie eine Schaltringnut 75. In einem Ringraum 77, begrenzt von dem Voröffnungsring 53 und dem Grundträger 23 bestimmt ein zweites Rückschlagventil 79 über die Schaltringnut 75 einen Zufluss vom kolbenstangenfernen Arbeitraum 9 in die Sacklochbohrungen 35. In der Schaltringnut 75 bestimmt ebenfalls ein axial beweglicher Ventilring 81 einen Zuflussquerschnitt 83 und einen Anschlussquerschnitt 85. Zwischen den Sacklochbohrungen 35 und dem Ringraum 46 bestehen ebenfalls Queröffnungen 87. Damit stellen auch die Sacklochbohrungen 35 einen Bypasskanal zum Schaltring 41 bei einer Anströmung der Kolbenanordnung aus Richtung des kolbenstangenfernen Arbeitsraums 9 dar.

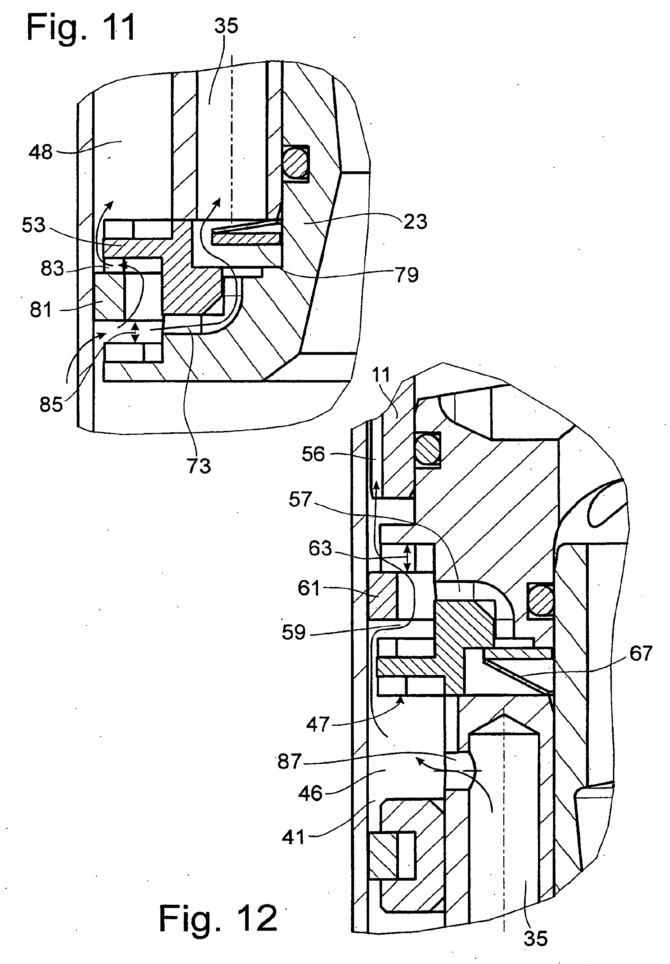

Die Figuren 1 bis 3 zeigen die Kolbenanordnung 1 in einer momentanen Betriebsstellung des Schaltrings 41, der über die Zuflussquerschnitte 63 und 85 eine vergleichsweise kleine Dämpfkraft erzeugt. Bei einer Kolbenstangeneinfahrbewegung in Richtung des Arbeitsraums 9 führt der Schaltring 41 mit dem Drosselring 45, der radial gegen den Zylinder 3 vorgespannt ist, eine Relativbewegung in Richtung der Anschlagfläche aus. Das Dämpfmedium kann von dem Arbeitsraum 9 über die Schaltringnut 75 in Verbindung mit dem großen Anschlussquerschnitt 85 und weiter durch die Anschlüsse 73 entlang des geöffneten Rückschlagventils 79 in die Sacklochöffnung 35 strömen. Die Queröffnungen 87 ermöglichen den Abfluss entlang der Schaltringnut 59 und dem Anschlussquerschnitt 63 in die Strömungsverbindung 56. Wie aus den Detaildarstellungen der Fig. 11 und 12 erkennbar ist, ist der Anschlussquerschnitt 85 größer als der Zuflussquerschnitt 83, damit der Schaltring mit einem gewissen Druckgefälle angeströmt wird, aber andererseits auch um eine ausreichende Versorgung des Ringraums 46 mit Dämpfmedium sicherzustellen, so dass der Schaltring leicht gebremst zur Anschlagfläche 47 gleiten kann.

Gleichzeitig kann Dämpfmedium durch die Schaltringnut 85 und dem Zuflussquerschnitt 83 in den Ringraum 48 einströmen. Über das Längsprofil in Form der Verbindungskanäle 37 sind beide Ringräume 46; 48 verbunden.

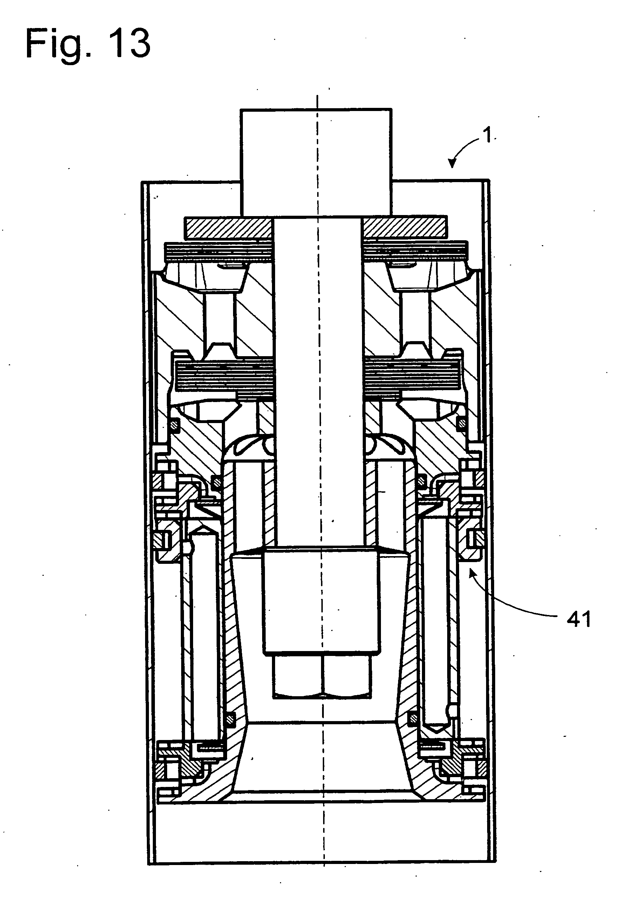

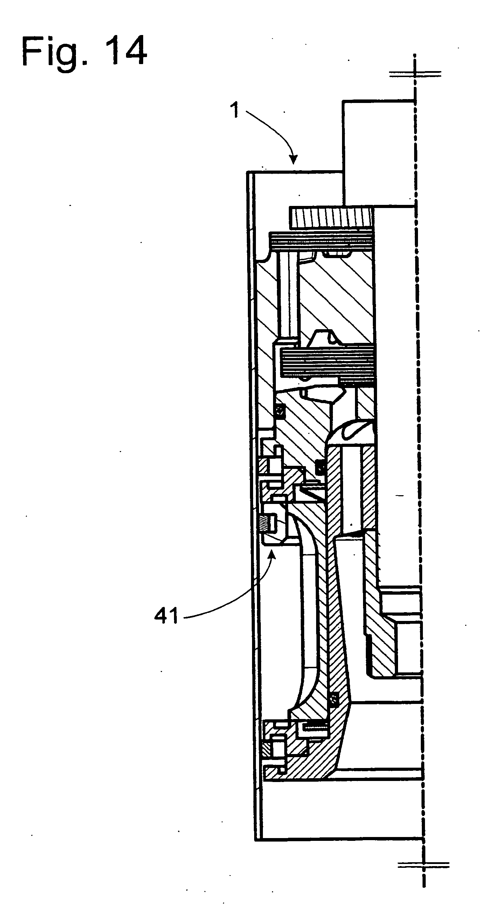

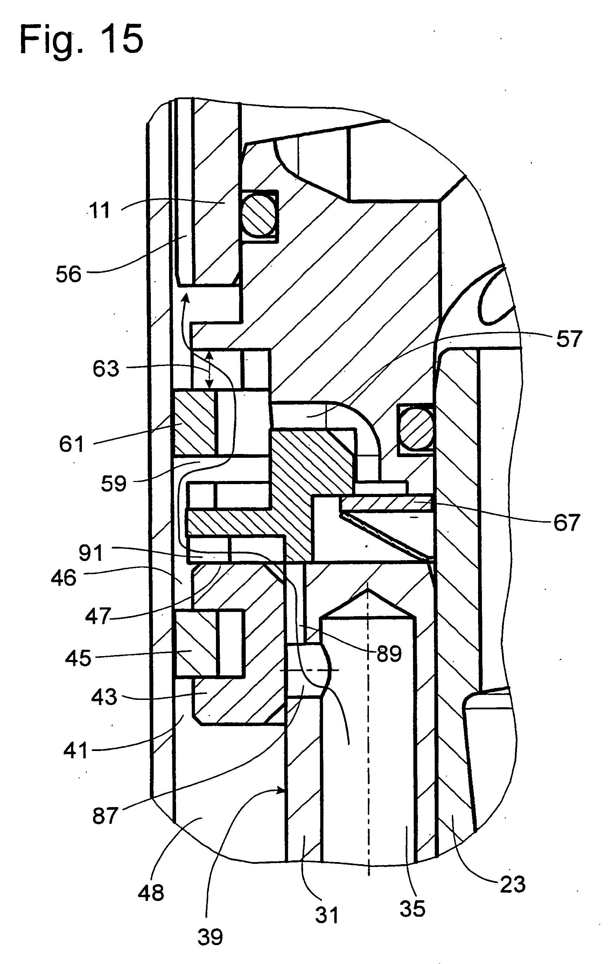

Bei einer größeren Kolbenstangeneinfahrbewegung oder Kolbenstangenamplitude nimmt der Schaltring 41 innerhalb der Kolbenanordnung 1 die Position gemäß den Figuren 13; 14 ein. Am Voröffnungsring behält das Rückschlagventil weiter die Betriebsstellung gemäß Fig. 11, so dass das Dämpfmedium in den Bypasskanal der Sacklochbohrung 35 einströmen kann. In Fig. 15 ist die Schaltringposition im Detail dargestellt. Der Schaltring 41 liegt an der Anschlagfläche 47 an. Die Queröffnung 87 wird von dem Führungsring 43 zwar abgedeckt, jedoch in Richtung des Ringraums 46 nicht hermetisch abgedichtet. Das Dämpfmedium fließt vom Bypasskanal der Sacklochbohrungen 35 durch die Queröffnungen 87 in Axialrinnen 89, die in der Anschlagfläche 47 münden, die mindestens eine radiale Kerbe als Voröffnungsquerschnitt 91 aufweisen. Der Voröffnungsquerschnitt 91 lässt den weiteren Fluss in Richtung der Schaltringnut 59 zu.

Bei entsprechenden Drücken in den Sacklochbohrungen 35 kann das Dämpfmedium auch zwischen dem Führungsring 43 und der Mantelfläche 39 der Distanzhülse 31 in den Ringraum 46 fließen. Dieser Ringraum 46 ist über die Queröffnungen 69 (Fig. 1) auch mit den Sacklochbohrungen 33 verbunden. Ein hydraulischer Kurzschluss in Richtung des Anschlusses 57 wird jedoch durch das geschlossene Rückschlagventil 67 verhindert. Wenn der Schaltring 41 an der Anschlagfläche 47 anliegt und eine definierte Kolbenstangeneinfahrgeschwindigkeit überschritten ist, öffnet auch das Dämpfventil 19 (Fig. 2) am Kolben 11.

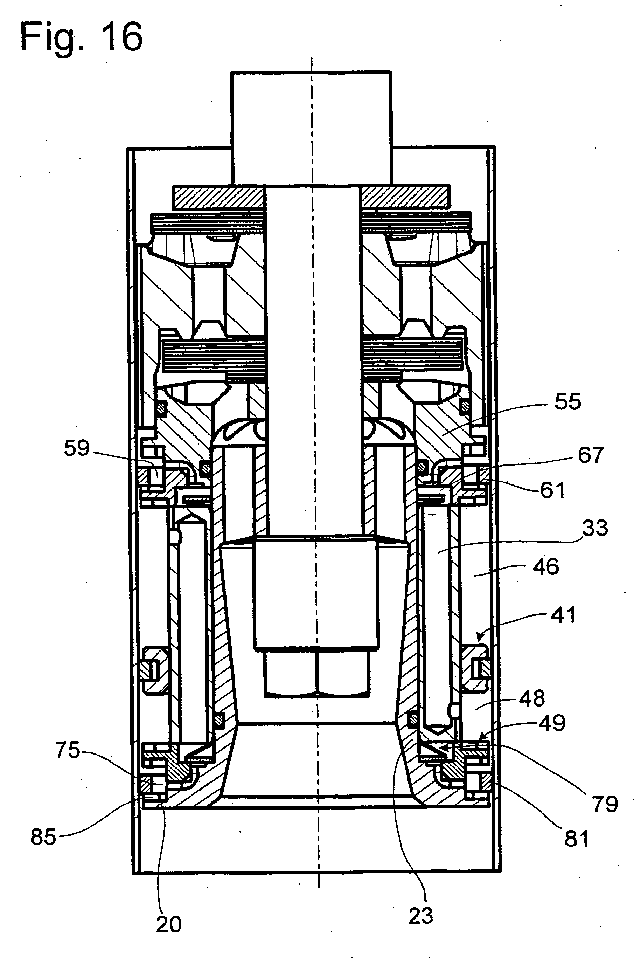

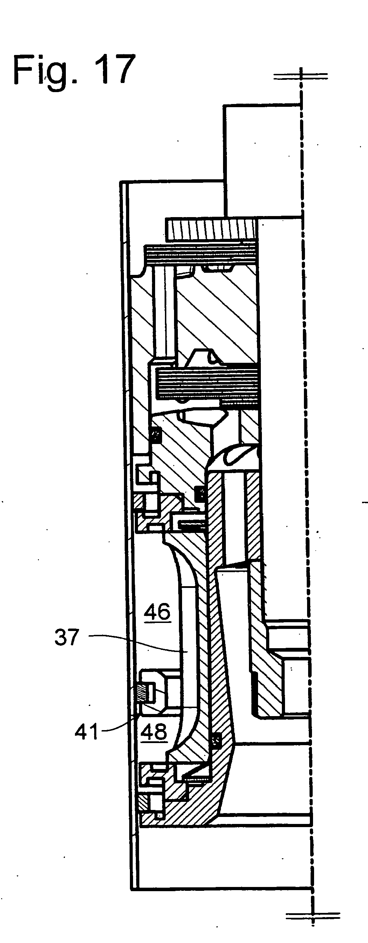

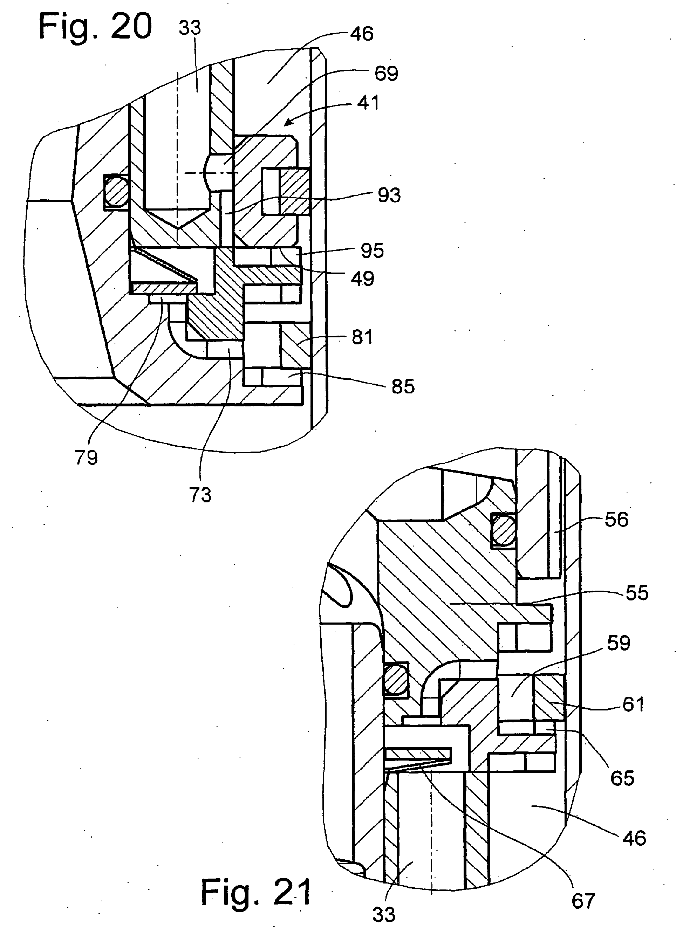

Die Figuren 16 und 17 zeigen die Kolbenanordnung in einer Betriebstellung während einer Kolbenstangenausfahrbewegung, bei der der Schaltring 41 die Anschlagfläche 49 noch nicht erreicht hat. Das Rückschlagventil 67 ist, wie die Fig. 21 zeigt, geöffnet, so dass Dämpfmedium von der Strömungsverbindung 56 durch den Verteilerring in die Sacklochbohrungen 33 einströmen kann. Gleichzeitig ist das Rückschlagventil 79 geschlossen. Auch die Ventilringe 61; 81 in den Schaltringnuten 59; 75 haben sich in Richtung des unteren Arbeitsraums verlagert. Der momentan wirksame Voröffnungsquerschnitt wird von dem Anschlussquerschnitt 85 im Flansch 20 des hülsenförmigen Grundträgers 23 bestimmt.

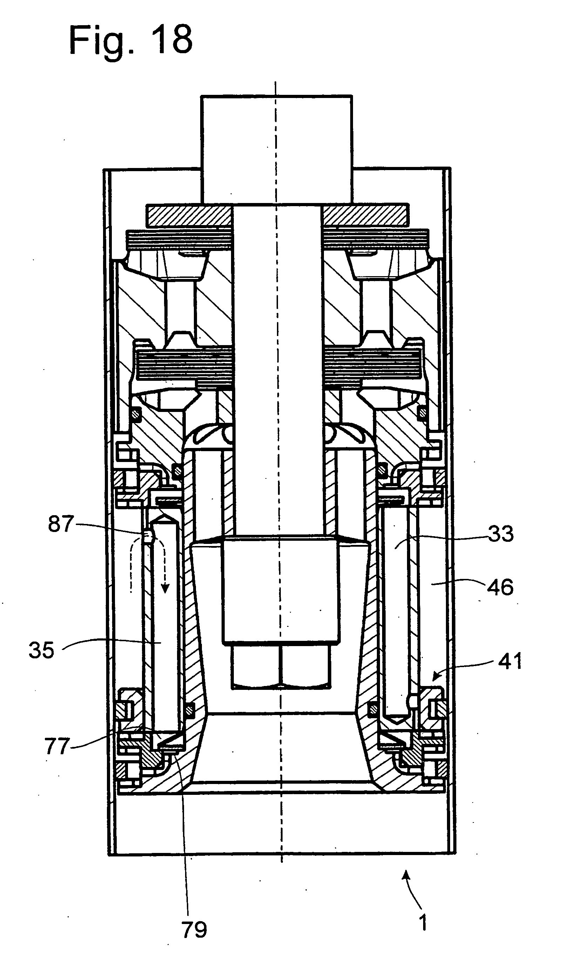

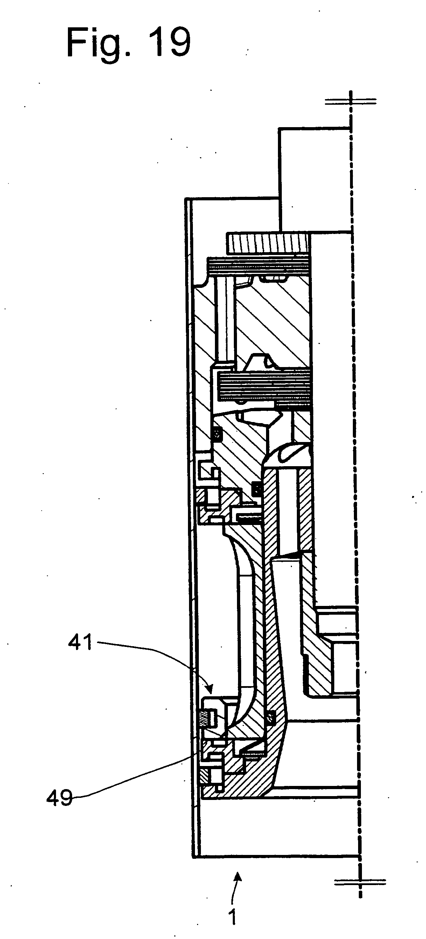

In den Figuren 18; 19 liegt der Schaltring 41 innerhalb der Kolbenanordnung 1 an der Anschlagfläche 49 an, wie in der Fig. 20 vergrößert dargestellt ist. Das Dämpfmedium fließt durch die Queröffnungen 69 aus den Sacklochbohrungen 33 in die Axialrinnen 93, die wiederum mit mindestens einem Voröffnungsquerschnitt 95 in der Anschlagfläche 49 verbunden sind. Der mindestens eine Voröffnungsquerschnitt 95 bestimmt die momentane Dämpfkraft, da der Querschnitt der Queröffnungen 69 und der Axialrinnen 93 sowie der Anschlussquerschnitte 85 deutlich größer sind. Es ist noch anzumerken, dass der Voröffnungsquerschnitt 95 für die Kolbenstangenausfahrbewegung tendenziell eher kleiner gewählt wird als der Voröffnungsquerschnitt 91 für die Bedämpfung der Kolbenstangeneinfahrbewegung.

Der Ventilring 61 in der Schaltringnut 59 begrenzt den Zuflussquerschnitt und das Rückschlagventil 67 ist weiterhin geöffnet. Damit auch für diese Durchströmungsrichtung der Kolbenanordnung kein hydraulischer Kurzschluss zwischen den Sacklochbohrungen 33; 35 und dem Ringraum 46 über die Queröffnung 87 auftreten kann, siehe Strömungspfeile in Figur 18, verschließt das Rückschlagventil den Ausgang der Sacklochbohrungen 35 in Richtung des Anschlusses 73.

Entsprechend dem Beschriebenen zur Kolbenstangeneinfahrbewegung steht bei einer entsprechenden Kolbenstangenausfahrgeschwindigkeit das geöffnete Dämpfventil 17 (Fig. 1) für den Dämpfmediumaustausch zwischen den Arbeitsräumen 9; 7 zur Verfügung.

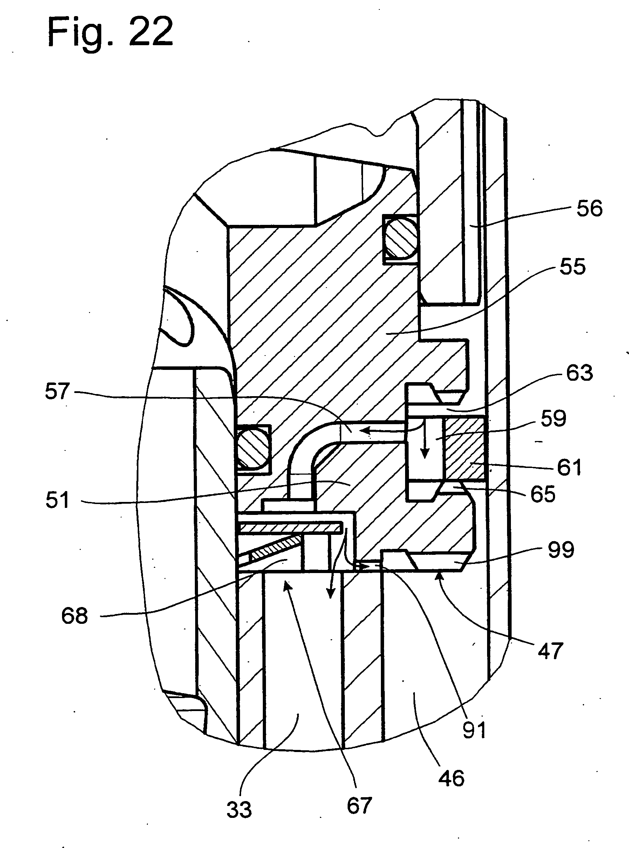

Die Figuren 22 bis 24 beschreiben eine Variante der Kolbenanordnung 1, bei der die Voröffnungsquerschnitte 91; 95 außerhalb der Flächen, z. B. der Anschlagflächen 47; 49 oder der Mantelfläche des Distanzhülse 31, die die von dem Schaltring 41 getrennten Ringräume 46; 48 begrenzen, angeordnet sind. So können die Voröffnungsquerschnitte abflussseitig an mindestens einem der Ringräume 68; 77 für die Rückschlagventile 67, 79 ausgeführt sein. In einer ersten Ausführungsform werden die Voröffnungsquerschnitte 91; 95 von einer Stirnfläche zwischen der Distanzhülse 31 und einem Voröffnungsring 51; 53 bestimmt. Dadurch ergeben sich wie aus der Fig. 22 erkennbar ist, zwei Teilströme, die über den Anschlussquerschnitt 63 in die Schaltringnut 59 eintreten. Ein erster Teilstrom gelang über den Anschluss 57 in den Ringraum 68, in dem das Rückschlagventil 67 eine Durchlassstellung einnimmt. Dieser Teilstrom verzweigt sich in einen Hauptstrom in die Sacklochbohrungen 33 und einen Nebenstrom durch den Voröffnungsquerschnitt 91 für die Kolbenstangeneinfahrbewegung in den Ringraum 46. Der zweite Teilstrom passiert den Zuflussquerschnitt 65 in den Ringraum 65.

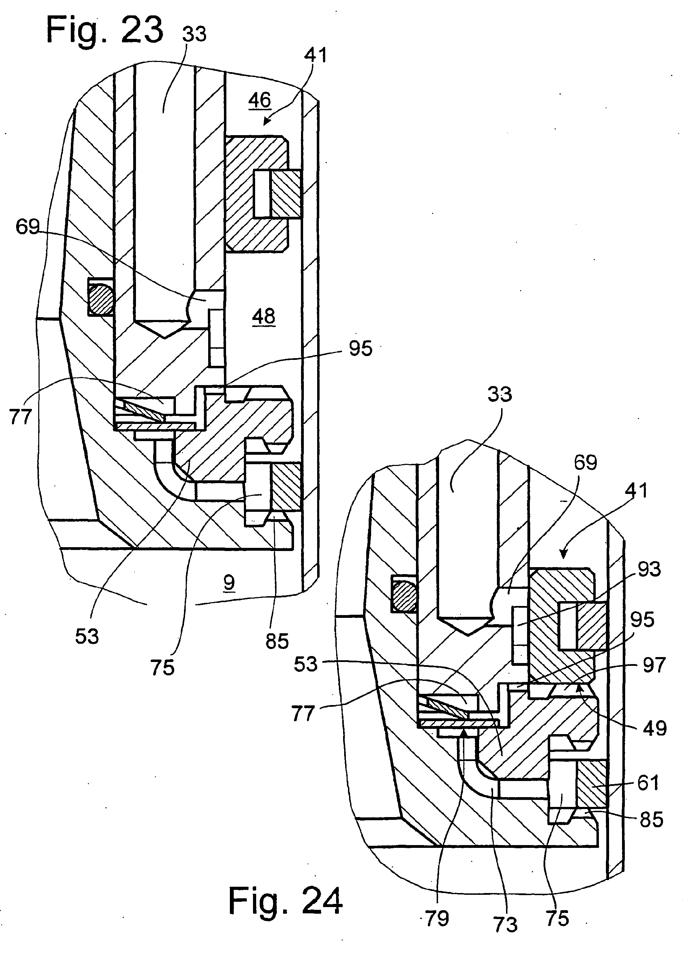

In der weichen Dämpfkrafteinstellung in Ausfahrrichtung der Kolbenstange befindet sich der Schaltring 41, wie die Fig. 23 zeigt, vor der Queröffnung 69. Deshalb kann der Hauptstrom aus der Sacklochbohrung 33 den direkten Weg über die Queröffnung 69 in die Schaltringnut 75 nehmen. Des weiteren besteht noch die Möglichkeit, dass das Dämpfmedium aus dem Ringraum 46 durch die Queröffnung 87 (s. Fig. 18) in die Sacklochbohrung 35 fließt und somit in den Ringraum 77 zwischen dem Voröffnungsring 53 und der Distanzhülse 31 gelangt. Der weitere Strömungsweg aus dem Ringraum 77 führt durch den Voröffnungsquerschnitt 95 in den unteren Ringraum 48 und weiter in die Schaltringnut 75.

Der zweite Teilstrom aus der Schaltringnut 59 kann durch den Ringraum 46 unter Ausnutzung des Längsprofils 37 (s. Fig. 17) den Schaltring 41 hinterströmen und in den Ringraum 48 gelangen. Sämtliche Teilströme passieren den Anschlussquerschnitt 85 in Richtung des Arbeitsraums 9.

In Fig. 24 liegt der Schaltring 41 an der Anschlagfläche 49 an, so dass die Queröffnung 69 und die Axialrinne 93 verschlossen sind. Der Hauptstrom aus den Sacklochbohrungen 33 ist blockiert. Das Längsprofil 37 wirkt bei dieser Schaltringposition ebenfalls nicht. Lediglich das Dämpfmediumvolumen, das aus dem Ringraum 46 über die Queröffnung 87 in die Sacklochbohrungen 35 fließt und sich im Ringraum 77 sammelt, kann über den Voröffnungsquerschnitt 95 austreten, da in der Anschlussfläche 49 eine Nut 97 eingeformt ist. Eine funktionsgleiche Nut 99 liegt in der Anschlagfläche 47 für die Dämpfkraftsteuerung in Einfahrrichtung der Kolbenstange vor. Die Nut 97 verfügt über einen deutlich größeren Querschnitt als der Voröffnungsquerschnitt 95 im Voröffnungsring 53, so dass der Voröffnungsquerschnitt 95 und nicht die Nut 97 die Dämpfkraft der Kolbenanordnung bestimmt.

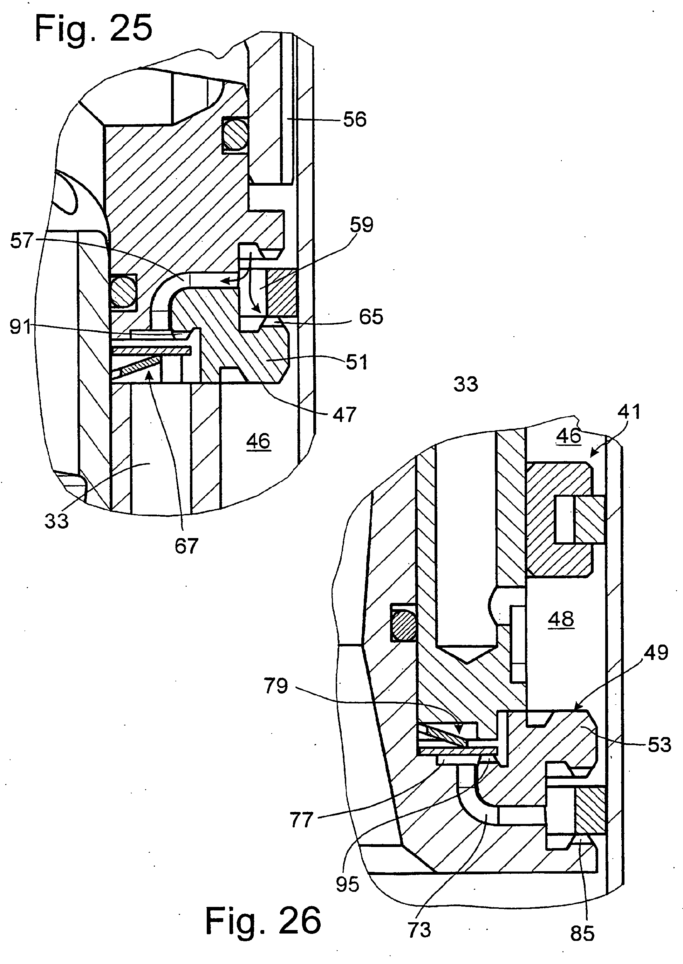

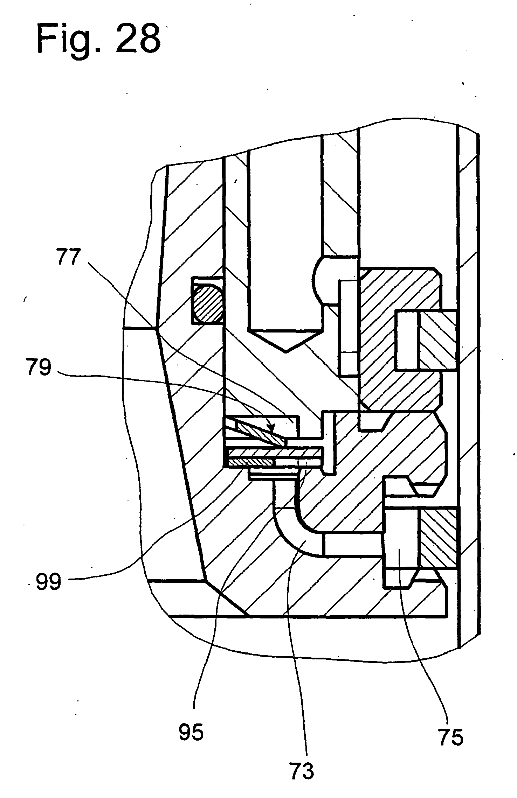

Die Fig. 25 bis 28 zeigten eine Ausführungsform der Kolbenanordnung, bei der die Voröffnungsquerschnitte 91; 95 Bestandteile der Rückschlagventile 67; 79 darstellen. Es besteht die Möglichkeit, dass die Voröffnungsquerschnitt 91; 95 von Kerben innerhalb der Ventilsitzflächen der Rückschlagventile 67; 79 oder wie die Fig. 28 zeigt, durch eine Voröffnungsscheibe 99 gebildet wird.

Bei einer Kolbenstangenausfahrbewegung erreicht das Dämpfmedium aus dem Arbeitsraum 7 durch die Strömungsverbindung 56 die Schaltringnut 59. Ein Teilstrom wird durch den Anschluss 57 und das geöffnete Rückschlagventil 67 in die Sacklochöffnung 33 geführt. Ein zweiter Teilstrom passiert den Zuflussquerschnitt 65 zum Ringraum 46. Aus dem Ringraum kann das Dämpfmedium, wie bereits mehrfach erwähnt über die Queröffnung 87 (Fig. 18) in die Sacklochbohrungen 33 und in Folge dessen auch in den Ringraum 77 gelangen. Selbstverständlich besteht bei einer Schaltringposition nach Fig. 26 die Verbindung der beiden Ringräume 46; 48 über das Längsprofil 37 (Fig. 17). Der wirksame Voröffnungsquerschnitt wird von dem Anschlussquerschnitt 85 bestimmt.

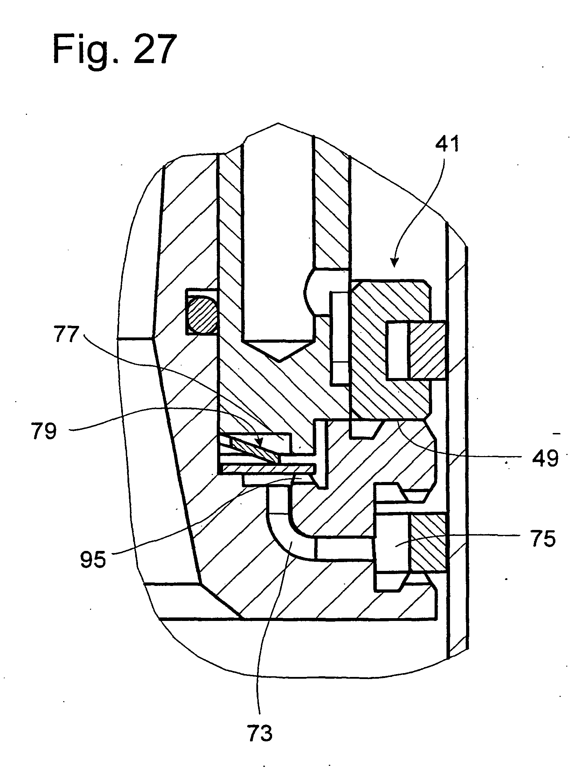

In der Fig. 27 hat der Schaltring 41 die Anschlagfläche 49 erreicht. Die Anschlagfläche verfügt abweichend zu den bisherigen Varianten über keine radialen Nuten oder sonstigen Öffnungen, so dass kein Dämpfmedium aus den Sacklochbohrungen 33 oder dem Längsprofil 37 in Richtung der Schaltringnut 75 fließen kann. Lediglich das aus über die Queröffnung 87 in die Sacklochbohrungen 35 in den Ringraum 77 gelangte Dämpfmedium kann über den Voröffnungsquerschnitt 95 in der Ventilsitzfläche des Rückschlagventils 79 (Fig. 27) oder den Voröffnungsquerschnitt innerhalb der Voröffnungsscheibe 99 (Fig. 28) in den Anschluss 73 und damit zum Anschlussquerschnitt 85 gelangen. Die zu den Figuren 22 bis 28 beschriebenen Strömungswege stehen funktionsgleich auch für das in Einfahrrichtung verdrängte Dämpfmedium zur Verfügung.

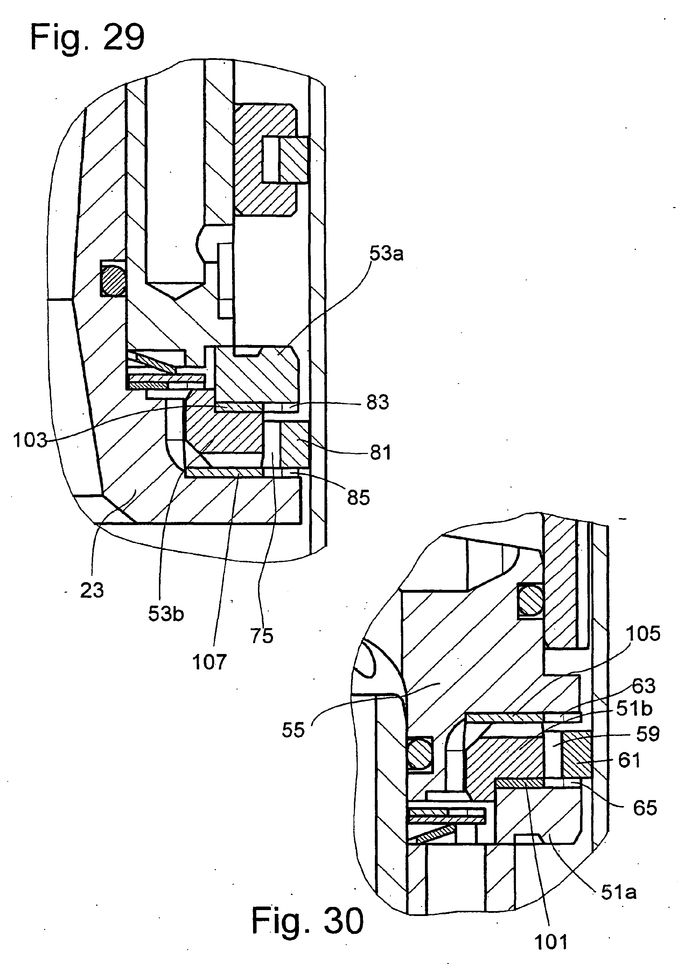

Die Figuren 29; 30 zeigen einen axial zweigeteilten Voröffnungsring 51a; 51b; 53a; 53b, der in dieser Bauform unabhängig von der Ausgestaltung der Strömungswege und der Voröffnungsquerschnitte einsetzbar ist. Axial zwischen den beiden Voröffnungsteilringen 51a; 51b bzw. 53a; 53b ist eine Ventilscheibe 101, 103 verspannt, die über eine radiale Aussparung den Zuflussquerschnitt 65; 83 bestimmen. Des weiteren ist eine Ventilscheibe 105; 107 mit den Anschlussquerschnitten 63; 85 zwischen dem Voröffnungsteilring 51b und dem Verteilerring 55 bzw. dem hülsenförmigen Grundträger 23 angeordnet. Durch diese Schichtung der Ventilscheiben und Ringe kann auf eine Prägung der Anschluss- und Zuflussquerschnitte im Voröffnungsring verzichtet werden. Generell ist diese Idee der Ventilscheiben 105; 107 auch bei einem einteiligen Voröffnungsring 51; 53 anwendbar.

## Patentansprüche

1. Schwingungsdämpfer mit amplitudenselektiver Dämpfkraft, umfassend eine Kolbenstange (5), die in einem dämpfmittelgefüllten Zylinder (3) axial beweglich geführt ist, wobei die Kolbenstange (5) eine Kolbenanordnung (1) trägt, die den Zylinder (3) in einen kolbenstangenseitigen und einen kolbenstangenfernen Arbeitsraum (7; 9) unterteilt, wobei zwischen den Arbeitsräumen (7; 9) eine Strömungsverbindung (37; 46; 48) vorliegt, die in Abhängigkeit von der Kolbenstangenbewegung von einem axial beweglichen Schaltring (41) gesteuert wird, der in Verbindung mit einer zum Schaltring (41) weisenden Wirkfläche einen Voröffnungsquerschnitt (91; 95) bestimmt, wobei der Schaltweg des Schaltrings (41) von zwei Anschlagflächen (47; 49) begrenzt wird,
**dadurch gekennzeichnet,**
**dass** hydraulisch parallel zur Strömungsverbindung (37; 46; 48) ein Bypasskanal (33; 35) vorliegt, der mindestens zwei Verbindungsöffnungen (69; 87) zur Strömungsverbindung aufweist, wobei jeweils mindestens eine Verbindungsöffnung (69; 87) einer Anschlagfläche (47; 49) vorgelagert ist und eine Rückschlagventilanordnung (67; 79) den Bypasskanal (33; 35) und die Strömungsverbindung (37; 46; 48) bei den verschiedenen Strömungsrichtungen in Abhängigkeit der Kolbenstangenbewegungen voneinander trennt, indem die Rückschlagventilanordnung zwei Rückschlagventile (67; 79) aufweist, die ein gegensinniges Schließverhalten aufweisen.

2. Schwingungsdämpfer nach Anspruch 1,
**dadurch gekennzeichnet,**
**dass** der Bypasskanal (33; 35) von einer Distanzhülse (31) gebildet wird.

3. Schwingungsdämpfer nach Anspruch 2,
**dadurch gekennzeichnet,**
**dass** die Distanzhülse (31) auf ihrer Außenseite (39) mit einem Längsprofil (37) zur Hinterströmung des Schaltrings (41) ausgeführt ist.

4. Schwingungsdämpfer nach Anspruch 1,
**dadurch gekennzeichnet,**
**dass** die Bypasskanäle (33; 35) von Sacklochbohrungen gebildet werden, die durch Queröffnungen (69; 87) miteinander verbunden sind.

5. Schwingungsdämpfer nach Anspruch 1,
**dadurch gekennzeichnet,**
**dass** die Kolbenanordnung (1) einen Verteilerring (55) mit einen Anschluss (57) an die Strömungsverbindung (37; 46; 48) und den Bypasskanal (33) aufweist.

6. Schwingungsdämpfer nach Anspruch 1,
**dadurch gekennzeichnet,**
**dass** die Wirkfläche für den Voröffnungsquerschnitt (91; 95) von einer Anschlagfläche (47; 49) gebildet wird.

7. Schwingungsdämpfer nach Anspruch 1,
**dadurch gekennzeichnet,**
**dass** für die Kolbenstangeneinfahr- und Ausfahrbewegung unterschiedlich große Voröffnungsquerschnitte (91; 95) vorliegen.

8. Schwingungsdämpfer nach Anspruch 1,
**dadurch gekennzeichnet,**
**dass** der Strömungsverbindung ein Voröffnungsring (51; 53) vorgelagert ist, der einen axial beweglichen Ventilring (61; 81) aufweist, der in Abhängigkeit seiner Schaltstellung einen Zufluss- und einen Anschlussquerschnitt (63; 65; 83; 85) für die Strömungsverbindung (46; 48) bestimmt.

9. Schwingungsdämpfer nach Anspruch 8,
**dadurch gekennzeichnet,**
**dass** der Zuflussquerschnitt (65; 83) zur Strömungsverbindung (46; 48) kleiner ist als der Anschlussquerschnitt (63; 85).

10. Schwingungsdämpfer nach Anspruch 8,
**dadurch gekennzeichnet,**
**dass** der Voröffnungsring (51) und der Verteilerring (55) einen Ringraum (68) begrenzen, in dem eines der Rückschlagventile (67) angeordnet ist.

11. Schwingungsdämpfer nach den Ansprüchen 2 und 10 ,
**dadurch gekennzeichnet,**
**dass** der Voröffnungsring (51; 53) zusammen mit dem hülsenförmigen Grundträger (23) eine Schaltringnut (59; 75) für den Ventilring (61; 81) bildet.

12. Schwingungsdämpfer nach Anspruch 1,
**dadurch gekennzeichnet,**
**dass** der Voröffnungsquerschnitt (91; 95) außerhalb der Flächen (47; 49; 37; 39) angeordnet ist, die die von dem Schaltring (41) getrennten Ringräume (46; 48) begrenzen.

13. Schwingungsdämpfer nach Anspruch 1,
**dadurch gekennzeichnet,**
**dass** der Voröffnungsquerschnitt (91; 95) abflussseitig an mindestens einem der Ringräume (68; 77) für ein Rückschlagventil (67; 79) ausgeführt ist.

14. Schwingungsdämpfer nach Anspruch 13
**dadurch gekennzeichnet,**
**dass** der Voröffnungsquerschnitt (91; 95) zwischen der Distanzhülse (31) und dem Voröffnungsring (51; 53) ausgeführt ist.

15. Schwingungsdämpfer nach Anspruch 13,
**dadurch gekennzeichnet,**
**dass** der Voröffnungsquerschnitt (91; 95) einen Bestandteil des Rückschlagventils (67; 79) darstellt.

16. Schwingungsdämpfer nach Anspruch 15,
**dadurch gekennzeichnet,**
**dass** der Voröffnungsquerschnitt (91; 95) innerhalb einer Ventilsitzfläche für das Rückschlagventil (67; 79) angeordnet ist.

17. Schwingungsdämpfer nach Anspruch 15,
**dadurch gekennzeichnet,**
**dass** der Voröffnungsquerschnitt (91; 95) von mindestens einer Voröffnungsscheibe (99) gebildet wird.

18. Schwingungsdämpfer nach Anspruch 8,
**dadurch gekennzeichnet,**
**dass** der Voröffnungsring (51; 53) axial zweigeteilt ausgeführt ist und eine Ventilscheibe (101; 103) mit dem Zuflussquerschnitt (65; 83) zwischen den Voröffnungsteilringen (51 a; 51 b; 53a; 53b) verspannt ist.

19. Schwingungsdämpfer nach Anspruch 1,
**dadurch gekennzeichnet,**
**dass** der Anschlussquerschnitt (85; 63) innerhalb einer Ventilscheibe (105; 107) ausgeführt ist.

20. Schwingungsdämpfer nach einem der Ansprüche 1 bis 19,
**dadurch gekennzeichnet,**
**dass** die Ventilscheibe (105; 107) durch einem Voröffnungsring (51; 53; 51b; 53b) verspannt ist.

## Claims

1. Vibration damper with amplitude-selective damping force, comprising a piston rod (5) which is guided in an axially movable manner in a cylinder (3) filled with a damping medium, the piston rod (5) carrying a piston arrangement (1) which divides the cylinder (3) into a working chamber (7) on the piston-rod side and a working chamber (9) remote from the piston rod, a flow connection (37; 46; 48) being present between the working chambers (7; 9), which flow connection (37; 46; 48) is controlled as a function of the piston-rod movement by an axially movable switching ring (41) which, in conjunction with an effective surface area oriented towards the switching ring (41), determines a pre-opening cross section (91; 95), the switching travel of the switching ring (41) being limited by two stop faces (47; 49), **characterised in that** a bypass channel (33; 35) hydraulically parallel to the flow connection (37; 46; 48) is present, which bypass channel (33; 35) has at least two connecting openings (69; 87) to the flow connection, at least one connecting opening (69; 87) being positioned ahead of a stop face (47; 49) and a non-return valve arrangement (67; 79) separating the bypass passage (33; 35) and the flow connection (37; 46; 48) from one another in the different flow directions as a function of the piston-rod movements, the non-return valve arrangement having two non-return valves (67; 79) which have oppositely directed closing behaviour.

2. Vibration damper according to Claim 1, **characterised in that** the bypass channel (33; 35) is formed by a spacer sleeve (31).

3. Vibration damper according to Claim 2, **characterised in that** the spacer sleeve (31) is configured on its outer face (39) with a longitudinal profile (37) for permitting a flow behind the switching ring (41).

4. Vibration damper according to Claim 1, **characterised in that** the bypass channels (33; 35) are formed by blind bores which are connected to one another by transverse openings (69; 87).

5. Vibration damper according to Claim 1, **characterised in that** the piston arrangement (1) has a distributor ring (55) with a connection (57) to the flow connection (37; 46; 48) and to the bypass channel (33).

6. Vibration damper according to Claim 1, **characterised in that** the effective surface area for the pre-opening cross section (91; 95) is formed by a stop face (47; 49).

7. Vibration damper according to Claim 1, **characterised in that** pre-opening cross sections (91; 95) of different sizes are present for the compression movement and the extension movement of the piston rod.

8. Vibration damper according to Claim 1, **characterised in that** a pre-opening ring (51; 53) is positioned upstream of the flow connection, which pre-opening ring (51; 53) has an axially movable valve ring (61; 81) which determines an inflow cross section and a connection cross section (63; 65; 83; 85) for the flow connection (46; 48) as a function of its switching position.

9. Vibration damper according to Claim 8, **characterised in that** the inflow cross section (65; 83) into the flow connection (46; 48) is smaller than the connection cross section (63; 85).

10. Vibration damper according to Claim 8, **characterised in that** the pre-opening ring (51) and the distributor ring (55) delimit an annular chamber (68) in which one of the non-return valves (67) is arranged.

11. Vibration damper according to Claims 2 and 10, **characterised in that** the pre-opening ring (51; 53) forms, together with the sleeve-shaped main carrier (23), a switching ring groove (59; 75) for the valve ring (61; 81).

12. Vibration damper according to Claim 1, **characterised in that** the pre-opening cross section (91; 95) is arranged outside the surfaces (47; 49; 37; 39) which delimit the annular chambers (46; 48) separated by the switching ring (41).

13. Vibration damper according to Claim 1, **characterised in that** the pre-opening cross section (91; 95) is configured on the discharge side for a non-return valve (67; 79) on at least one of the annular chambers (68; 77).

14. Vibration damper according to Claim 13, **characterised in that** the pre-opening cross section (91; 95) is formed between the spacer sleeve (31) and the pre-opening ring (51; 53).

15. Vibration damper according to Claim 13, **characterised in that** the pre-opening cross section (91; 95) is a component of the non-return valve (67; 79).

16. Vibration damper according to Claim 15, **characterised in that** the pre-opening cross section (91; 95) is arranged inside a valve seat face for the non-return valve (67; 79).

17. Vibration damper according to Claim 15, **characterised in that** the pre-opening cross section (91; 95) is formed by at least one pre-opening disc (99).

18. Vibration damper according to Claim 8, **characterised in that** the pre-opening ring (51; 53) has an axially-divided two-part configuration and a valve disc (101; 103) is tensioned with the inflow cross section (65; 83) between the pre-opening ring parts (51a; 51b; 53a; 53b).

19. Vibration damper according to Claim 1, **characterised in that** the connection cross section (85; 63) is configured inside a valve disc (105; 107).

20. Vibration damper according to any one of Claims 1 to 19, **characterised in that** the valve disc (105; 107) is tensioned by a pre-opening ring (51; 53; 51b; 53b).

## Revendications

1. Amortisseur de vibrations avec une force d'amortissement dépendant de l'amplitude, comprenant une tige de piston (5) qui est guidée de manière déplaçable axialement dans un cylindre (3) rempli de fluide d'amortissement, la tige de piston (5) portant un agencement de piston (1) qui divise le cylindre (3) en une chambre de travail (7 ; 9) du côté de la tige de piston et du côté opposé à la tige de piston, une connexion fluidique (37 ; 46 ; 48) étant établie entre les deux chambres de travail (7 ; 9), laquelle est commandée en fonction du déplacement de la tige de piston par un anneau de commutation (41) déplaçable axialement, qui détermine une section transversale de pré-ouverture (91 ; 95) en liaison avec une surface active tournée vers l'anneau de commutation (41), la course de commutation de l'anneau de commutation (41) étant limitée par deux surfaces de butée (47 ; 49),
**caractérisé en ce**
**qu'**un canal de dérivation (33 ; 35) hydraulique parallèle à la connexion fluidique (37 ; 46 ; 48) est prévu, lequel présente au moins deux ouvertures de connexion (69 ; 87) pour la connexion fluidique, à chaque fois au moins une ouverture de connexion (69 ; 87) étant disposée avant une surface de butée (47 ; 49) et un agencement de clapets anti-retour (67 ; 79) séparant l'un de l'autre le canal de dérivation (33 ; 35) et la connexion fluidique (37 ; 46 ; 48) dans les différents sens d'écoulement en fonction des déplacements de la tige de piston, par le fait que l'agencement de clapets anti-retour présente deux clapets anti-retour (67 ; 79) qui présentent un comportement de fermeture de sens opposé.

2. Amortisseur de vibrations selon la revendication 1,
**caractérisé en ce que**
le canal de dérivation (33 ; 35) est formé par une douille d'espacement (31).

3. Amortisseur de vibrations selon la revendication 2,
**caractérisé en ce que**
la douille d'espacement (31) est réalisée sur son côté extérieur (39) avec un profilé longitudinal (37) permettant l'écoulement par l'arrière de l'anneau de commutation (41).

4. Amortisseur de vibrations selon la revendication 1,
**caractérisé en ce que**
les canaux de dérivation (33 ; 35) sont formés par des alésages borgnes, qui sont connectés les uns aux autres par des ouvertures transversales (69 ; 87).

5. Amortisseur de vibrations selon la revendication 1,
**caractérisé en ce que**
l'agencement de piston (1) présente un anneau de distribution (55) avec un raccord (57) à la connexion fluidique (37 ; 46 ; 48) et au canal de dérivation (33).

6. Amortisseur de vibrations selon la revendication 1,
**caractérisé en ce que**
la surface active pour la section transversale de pré-ouverture (91 ; 95) est formée par une surface de butée (47 ; 49).

7. Amortisseur de vibrations selon la revendication 1,
**caractérisé en ce que**
pour le déplacement de rentrée et de sortie de la tige de piston, on dispose de différentes sections transversales de pré-ouverture (91 ; 95).

8. Amortisseur de vibrations selon la revendication 1,
**caractérisé en ce que**
la connexion fluidique est précédée d'un anneau de pré-ouverture (51 ; 53) qui présente un anneau de clapet (61 ; 81) déplaçable axialement, qui définit, en fonction de sa position de commutation, une section transversale d'afflux et une section transversale de raccord (63 ; 65 ; 83 ; 85) pour la connexion fluidique (46 ; 48).

9. Amortisseur de vibrations selon la revendication 8,
**caractérisé en ce que**
la section transversale d'afflux (65 ; 83) à la connexion fluidique (46 ; 48) est inférieure à la section transversale de raccord (63 ; 85).

10. Amortisseur de vibrations selon la revendication 8,
**caractérisé en ce que**
l'anneau de pré-ouverture (51) et l'anneau de distribution (55) délimitent une chambre annulaire (68) dans laquelle est disposé l'un des clapets anti-retour (67).

11. Amortisseur de vibrations selon les revendications 2 et 10,
**caractérisé en ce que**
l'anneau de pré-ouverture (51 ; 53) forme, conjointement avec le support de base (23) en forme de douille, une rainure annulaire de commutation (59 ; 75) pour l'anneau de clapet (61 ;81).

12. Amortisseur de vibrations selon la revendication 1,
**caractérisé en ce que**
la section transversale de pré-ouverture (91 ; 95) est disposée en dehors des surfaces (47 ; 49 ; 37 ; 39) qui délimitent les chambres annulaires (46 ; 48) séparées par l'anneau de commutation (41).

13. Amortisseur de vibrations selon la revendication 1,
**caractérisé en ce que**
la section transversale de pré-ouverture (91 ; 95) est réalisée du côté de l'évacuation au niveau d'au moins l'une des chambres annulaires (68 ; 77) pour un clapet anti-retour (67 ; 79).

14. Amortisseur de vibrations selon la revendication 13,
**caractérisé en ce que**
la section transversale de pré-ouverture (91 ; 95) est réalisée entre la douille d'espacement (31) et l'anneau de pré-ouverture (51 ; 53).

15. Amortisseur de vibrations selon la revendication 13,
**caractérisé en ce que**
la section transversale de pré-ouverture (91 ; 95) constitue un composant du clapet anti-retour (67 ; 79).

16. Amortisseur de vibrations selon la revendication 15,
**caractérisé en ce que**
la section transversale de pré-ouverture (91 ; 95) est disposée à l'intérieur d'une surface de siège de soupape pour le clapet anti-retour (67 ; 79).

17. Amortisseur de vibrations selon la revendication 15,
**caractérisé en ce que**
la section transversale de pré-ouverture (91 ; 95) est formée par au moins un disque de pré-ouverture (99).

18. Amortisseur de vibrations selon la revendication 8,
**caractérisé en ce que**
l'anneau de pré-ouverture (51 ; 53) est réalisé de manière divisée axialement en deux, et un disque de clapet (101 ; 103) avec la section transversale d'afflux (65 ; 83) est serré entre les anneaux partiels de pré-ouverture (51a ; 51b ; 53a ; 53b).

19. Amortisseur de vibrations selon la revendication 1,
**caractérisé en ce que**
la section transversale de raccord (85 ; 63) est réalisée à l'intérieur d'un disque de soupape (105 ; 107).

20. Amortisseur de vibrations selon l'une quelconque des revendications 1 à 19,
**caractérisé en ce que**
le disque de clapet (105 ; 107) est serré par un anneau de pré-ouverture (51 ; 53 ; 51b ; 53b).
